# FASCICULE DE BREVET EUROPEEN

(11) **EP 0 684 396 B1**
(45) Date de publication et mention de la délivrance du brevet: **10.03.1999**
(21) Numéro de dépôt: 95107823.7
(22) Date de dépôt: 23.05.1995
(51) Int. Cl.: F16B 29/00, F16B 5/02, B60S 1/04

(54) **Dispositif de fixation d'un ensemble sur la caisse d'un véhicule automobile et module d'essuyage comportant un tel dispositif**
Vorrichtung zur Befestigung einer Anordnung an einer Kraftfahrzeugkarosserie und Wischermodul mit einer derartigen Vorrichtung
Device for fastening an assembly to an automotive vehicle body and wiper module with such a device

(30) Priorité: 26.05.1994 FR 9406517
(43) Date de publication de la demande: 29.11.1995
(60) Demande divisionnaire: 98115385.1
(73) Titulaire: VALEO SYSTEMES D'ESSUYAGE, 78321 La Verrière (FR)
(72) Inventeur: Morin, Pascal, F-86100 Chatellerault (FR)
(74) Mandataire: Gamonal, Didier

(56) Documents cités:
- FR-A- 1 368 673
- FR-A- 1 541 433
- GB-A- 1 467 378
- US-A- 3 489 312

## Description

La présente invention concerne un ensemble comportant une platine pour la fixation sur la caisse d'un véhicule automobile, selon la préambule de la revendication 1 (FR-A-1541433).

L'invention trouve notamment à s'appliquer pour le montage et la fixation d'un module d'essuyage de vitre du véhicule.

Un tel module d'essuyage comporte une platine de support qui porte les différents organes pour l'entraînement en rotation alternée dont au moins un essuie-glace.

Selon une technique connue, la platine comporte une série de trous de fixation prévus pour être traversés chacun par le corps fileté d'une vis appartenant à un ensemble du type vis-écrou.

Selon un agencement connu, le corps fileté traverse un trou de la platine, un trou formé par exemple dans une rondelle d'amortissement interposée entre la platine et une face d'un élément de la caisse du véhicule, et un trou de l'élément de la caisse, pour être vissé dans un écrou qui est agencé sur l'autre face de l'élément de caisse et qui est reçu dans une cage de maintien de l'écrou.

Selon un agencement le plus couramment utilisé, la rondelle d'amortissement est réalisée sous la forme d'un support élastique monté dans le trou de la platine.

Les conceptions connues pour la réalisation d'une cage d'écrou sont des conceptions selon lesquelles la cage est un élément en tôle découpée et pliée à l'intérieur duquel est monté l'écrou et qui est ensuite emboîté élastiquement dans le trou formé dans l'élément de caisse, cet agencement étant complété par des moyens pour empêcher la rotation de la cage par rapport à l'élément de la caisse.

Ces exemples de conception sont particulièrement coûteux et difficiles à mettre en oeuvre, notamment dans le cadre d'une automatisation des opérations de montage et de fixation de sous-ensembles sur la caisse du véhicule.

La présente invention a pour but de proposer une nouvelle conception d'un dispositif de montage du type mentionné précédemment qui permette de remédier à ces inconvénients.

Dans ce but, l'invention propose un ensemble selon la revendication 1.

Selon d'autres modes particulières de l'invention :
- le corps fileté appartient à une vis de serrage ;
- la pièce d'assemblage présente sensiblement une forme de révolution autour de l'axe de vissage ;
- la partie formant cage comporte un alésage étagé comportant un premier tronçon pour le passage à rotation du corps fileté et un deuxième tronçon de plus grande dimension qui reçoit l'écrou ;
- l'extrémité libre de la partie formant cage comporte des moyens de retenue axiale de l'écrou dans le deuxième tronçon ;
- l'alésage comporte un troisième tronçon de dimension inférieure à celle du deuxième tronçon ;
- l'extrémité libre de la partie formant cage est resserrée radialement vers l'intérieur ;
- la zone de raccordement entre les premier et second tronçons est conique ;
- le premier tronçon est conique ;
- la pièce d'assemblage est surmoulée sur l'écrou ;
- avant serrage, la pièce d'assemblage est emmanchée à force dans le trou de l'élément de caisse du véhicule.

L'invention propose également un module d'essuyage d'une vitre de véhicule automobile comportant une platine portant des organes d'entraînement d'au moins un essuie-glace, caractérisé en ce que la platine est fixée sur la caisse du véhicule au moyen d'au moins un dispositif de fixation conforme aux enseignements de l'invention.

D'autres caractéristiques et avantages de l'invention apparaîtront à la lecture de la description détaillée qui va suivre pour la compréhension de laquelle on se reportera au dessin annexé dans lequel :
- la figure 1 est une vue schématique, en section axiale, d'un premier exemple de réalisation d'un dispositif de fixation conforme aux enseignements de l'invention, qui est illustré avant serrage ;
- la figure 2 est une vue similaire à celle de la figure 1 qui illustre le dispositif de fixation après serrage ;
- la figure 3 est une vue similaire à celle de la figure 1 qui illustre un second mode de réalisation d'un dispositif de fixation conforme aux enseignements de l'invention ; et
- la figure 4 est une vue similaire à celle de la figure 1 qui illustre un troisième mode de réalisation d'un dispositif de fixation conforme aux enseignements de l'invention.

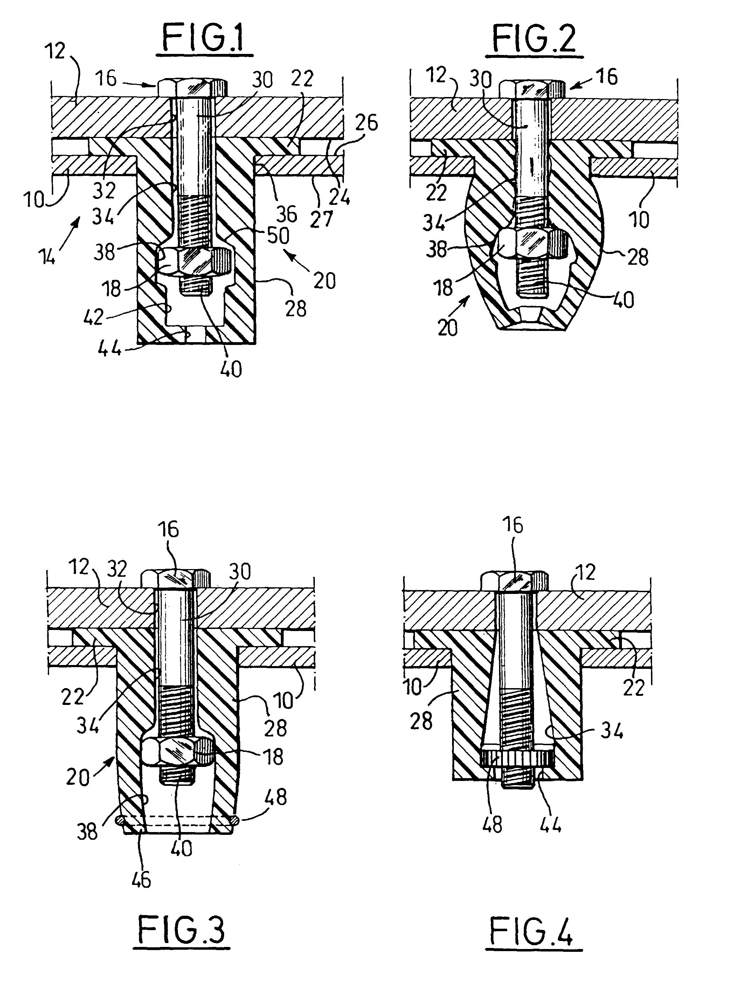

On a représenté sur la figure 1 une tôle 10 appartenant à un élément de structure de la caisse d'un véhicule automobile sur lequel est fixé une platine 12 appartenant par exemple à un module d'essuyage.

La platine 12 est fixée sur la tôle 10 au moyen d'un dispositif de fixation 14 qui est pour l'essentiel constitué d'un ensemble vis-écrou 16-18 et d'une pièce d'assemblage en matériau élastomère 20.

La pièce unique 20, qui est déformable élastiquement, est constituée par une rondelle supérieure 22 qui est interposée entre la face inférieure 24 de la platine 12 et la face supérieure 26 de la tôle 10.

La pièce 20 comporte également un corps 28 de forme générale extérieure cylindrique 28 qui fait fonction de cage de retenue pour l'écrou 18 et de cheville expansible et qui s'étend axialement au delà de la face inférieure 27 de la tôle 10.

Le corps fileté 30 de la vis 16 traverse successivement un trou 32 formé dans la tôle 12 et un premier tronçon 34 formé dans la partie supérieure du corps inférieur 28 de la pièce d'assemblage 20 qui traverse un trou 36 formé dans la tôle 10.

Afin d'empêcher une rotation relative de la pièce 20 par rapport à la tôle 10, lors de la phase initiale de serrage, le corps 28 est emmanché légèrement à force dans le trou 36.

Le premier tronçon 34 débouche dans un deuxième tronçon 38, de plus grand diamètre, dans lequel est inséré l'écrou 18 qui reçoit l'extrémité libre filetée 40 de la vis 16.

Afin d'empêcher, avant l'introduction de la vis 16, la chute verticale de l'écrou 18, l'alésage étagé formé dans le corps 28 de la pièce d'assemblage 20 se termine, à sa partie inférieure, par un troisième tronçon 42 dont le diamètre est inférieur à celui du deuxième tronçon 38.

L'écrou 18 peut initialement être introduit à force, par l'extrémité inférieure percée 44, jusqu'à occuper sa position illustrée sur la figure 1 dans le second tronçon 38, ou, selon une autre conception, la pièce unique d'assemblage 20 peut être surmoulée sur l'écrou 18.

L'assemblage et la fixation de la platine 12 s'effectue de la manière suivante.

L'opérateur, ou le robot d'assemblage, commence par mettre en place la pièce unique d'assemblage 20 dans sa position illustrée sur la figure 1 puis, il vient visser la vis 16 dont l'extrémité fileté 40 commence par se visser dans l'écrou 18 puis, sous l'action de la rotation poursuivie de la vis 16 et du fait de l'immobilisation en rotation de l'écrou 18 par rapport à l'assemblage, il provoque la montée progressive de l'écrou 18 qui provoque l'expansion radiale de la partie supérieure du corps 28 comme cela est illustré sur la figure 2.

A l'issue des opérations finales de serrage, la platine 12 est fixée sur la tôle 10 au moyen de la pièce unique d'assemblage 20 qui fait fonction de cheville expansible, et la partie supérieure 22 en forme de rondelle est interposée entre la platine 12 et la tôle 10 et fait ainsi fonction d'amortisseur de vibrations.

Dans la variante de réalisation illustrée sur la figure 3, la partie inférieure d'extrémité libre 46 du corps 28 de la pièce unique d'assemblage 20 est resserrée radialement vers l'intérieure par un joint élastique de serrage 48, de façon à éviter l'échappement axial de l'écrou 18 hors du deuxième tronçon 38 de l'alésage étagé formé dans le corps 28.

Comme on peut le voir sur les figures 1 à 3, la zone de raccordement 50 entre les premier 34 et deuxième 38 tronçon de l'alésage étagé est de profil conique de manière à faciliter l'effet d'expansion de la cheville lors des opérations de serrage.

Dans le troisième mode de réalisation illustré sur la figure 4, c'est la totalité de la longueur du premier tronçon 34 qui est de profil conique tandis que le second tronçon 38 est en tronçon sensiblement cylindrique dont la hauteur est réduite à celle de l'écrou 48 qui est ici réalisé sous la forme d'une rondelle taraudée en son centre et dont la surface cylindrique périphérique comporte des cannelures qui empêchent sa rotation à l'intérieur du corps 28.

Le trou 44 formé à l'extrémité libre inférieure 46 fait fonction de troisième tronçon 42 pour l'alésage étagé formé dans le corps 28 qui évite la chute de l'écrou-rondelle 48 avant les opérations de montage et de serrage.

L'invention n'est pas limitée aux modes de réalisation qui viennent d'être décrits.

La notion de cage réalisée venue de matière avec la rondelle d'amortissement 22 englobe tous les moyens permettant d'assurer la même fonction, que l'écrou soit retenu directement à l'intérieur du corps 28 ou par exemple à l'extrémité inférieure de ce dernier.

L'écrou 18 peut également être "intégré" à la pièce unique d'assemblage 20 dont la partie de l'alésage intérieur est alors taraudée pour faire fonction d'écrou de serrage d'expansion.

## Revendications

1. Ensemble comportant une platine (12) et un dispositif (14) de fixation de la platine (12) sur la caisse (10) d'un véhicule automobile, le dispositif de fixation comportant un ensemble vis-écrou (16, 18), une rondelle (22) apte à être interposée entre la platine (12) et une première face (26) d'un élément (10) de caisse du véhicule et une cage de maintien de l'écrou (18), dans lequel le corps fileté (30-40) de l'ensemble vis-écrou traverse un trou (32) de la platine, un trou (34) formé dans la rondelle (22) et est destiné à traverser un trou (36) de l'élément (10) de la caisse pour être vissé dans l'écrou (18) qui est apte à être agencé sur l'autre face (27) de l'élément de caisse (10) et qui est reçu dans la cage (28), la rondelle (22) et la cage (28) sont réalisées en une seule pièce d'assemblage (20), dont la partie formant cage (28) se déforme en expansion lors des opérations de serrage de l'ensemble vis-écrou, caractérisé en ce que la rondelle est une rondelle d'amortissement et en ce que la rondelle (22) et la cage (28) sont réalisées en matériau élastomère, ou en caoutchouc.

2. Ensemble selon la revendication 1, caractérisé en ce que le corps fileté (30, 40) appartient à une vis de serrage (16).

3. Ensemble selon l'une des revendications 1 ou 2, caractérisé en ce que la pièce d'assemblage (20) présente sensiblement une forme de révolution autour de l'axe de vissage.

4. Ensemble selon la revendication 3, caractérisé en ce que la partie formant cage (28) comporte un alésage étagé comportant un premier tronçon (34) pour le passage à rotation du corps fileté (30) et un deuxième tronçon de plus grande dimension qui reçoit l'écrou (18).

5. Ensemble selon la revendication 4, caractérisé en ce que l'extrémité libre (46) de la partie formant cage (28) comporte des moyens de retenue axiale de l'écrou dans le deuxième tronçon (42).

6. Ensemble selon la revendication 5, caractérisé en ce que l'alésage comporte un troisième tronçon (42) de dimension inférieure à celui du deuxième tronçon (38).

7. Ensemble selon la revendication 5, caractérisé en ce que la partie formant cage (28) est resserrée radialement vers l'intérieur.

8. Ensemble selon l'une quelconque des revendications 4 à 7, caractérisé en ce que la zone de raccordement (50) entre le premier (34) et le second tronçon (38) est conique.

9. Ensemble selon l'une quelconque des revendications précédentes, caractérisé en ce que la pièce d'assemblage (20) est surmoulée sur l'écrou (18).

10. Ensemble selon l'une quelconque des revendications précédentes, caractérisé en ce que la pièce d'assemblage (20) est apte à être emmanchée avant serrage à force dans le trou (36) de l'élément de caisse (10) du véhicule.

11. Module d'essuyage d'une vitre de véhicule automobile comportant une platine (12) portant des organes d'entraînement d'au moins un essuie-glace, caractérisé en ce que la platine (12) est fixée sur un élément (10) de la caisse du véhicule au moyen d'un dispositif de fixation, l'ensemble platine-dispositif de fixation étant réalisé conformément à l'une quelconque des revendications précédentes.

## Patentansprüche

1. Baugruppe, umfassend eine Halterung (12) und eine Vorrichtung (14) zur Befestigung der Halterung (12) an der Karosserie (10) eines Kraftfahrzeugs, wobei die Befestigungsvorrichtung eine Schrauben-Mutter-Einheit (16, 18), eine Scheibe (22), die zwischen der Halterung (12) und einer ersten Fläche (26) eines Elements (10) der Fahrzeugkarosserie eingefügt werden kann, und eine Halteaufnahme für die Mutter (18) umfaßt, wobei der Gewindekörper (30-40) der Schrauben-Mutter-Einheit durch ein Loch (32) der Halterung und ein in der Scheibe (22) ausgebildetes Loch (34) hindurchgeht und dazu bestimmt ist, durch ein Loch (36) des Elements (10) der Karosserie hindurchzugehen, um in die Mutter (18) eingeschraubt zu werden, die auf der anderen Fläche (27) des Karosserieelements (10) angeordnet werden kann und die in der Aufnahme (28) aufgenommen ist, wobei die Scheibe (22) und die Aufnahme (28) in einem einheitlichen Verbindungsteil (20) ausgeführt sind, dessen als Aufnahme (28) ausgebildeter Teil sich bei den Vorgängen zum Festspannen der Schrauben-Mutter-Einheit spreizverformt, **dadurch gekennzeichnet**, daß die Scheibe eine Dämpfungsscheibe ist und daß die Scheibe (22) und die Aufnahme (28) aus Elastomermaterial oder aus Gummi ausgeführt sind.

2. Baugruppe nach Anspruch 1 , **dadurch gekennzeichnet**, daß der Gewindekörper (30, 40) zu einer Spannschraube (16) gehört.

3. Baugruppe nach einem der Ansprüche 1 oder 2, **dadurch gekennzeichnet**, daß das Verbindungsteil (20) in etwa eine rotationssymmetrische Form um die Verschraubungsachse herum aufweist.

4. Baugruppe nach Anspruch 3 , **dadurch gekennzeichnet**, daß der als Aufnahme (28) ausgebildete Teil eine abgestufte Bohrung enthält, die ein erstes Teilstück (34) für den drehbaren Durchgang des Gewindekörpers (30) und ein zweites Teilstück mit größerem Durchmesser umfaßt, das die Mutter (18) aufnimmt.

5. Baugruppe nach Anspruch 4 , **dadurch gekennzeichnet**, daß das freie Ende (46) des als Aufnahme (28) ausgebildeten Teils Haltemittel zum axialen Festhalten der Mutter im zweiten Teilstück (42) umfaßt.

6. Baugruppe nach Anspruch 5 , **dadurch gekennzeichnet**, daß die Bohrung ein drittes Teilstück (42) mit kleinerer Abmessung als das zweite Teilstück (38) umfaßt.

7. Baugruppe nach Anspruch 5 , **dadurch gekennzeichnet**, daß der als Aufnahme (28) ausgebildete Teil radial nach innen verengt ist.

8. Baugruppe nach einem der Ansprüche 4 bis 7 , **dadurch gekennzeichnet**, daß der Anschlußbereich (50) zwischen dem ersten (34) und dem zweiten Teilstück (38) konisch ist.

9. Baugruppe nach einem der vorangehenden Ansprüche, **dadurch gekennzeichnet**, daß das Verbindungsteil (20) auf der Mutter (18) aufgeformt ist.

10. Baugruppe nach einem der vorangehenden Ansprüche, **dadurch gekennzeichnet**, daß das Verbindungsteil (20) vor dem Festspannen fest in das Loch (36) des Karosserieelements (10) des Fahrzeugs eingesteckt werden kann.

11. Wischermodul für eine Kraftfahrzeugscheibe, umfassend eine Halterung (12), die Antriebsorgane für mindestens einen Scheibenwischer trägt, **dadurch gekennzeichnet**, daß die Halterung (12) an einem Element (10) der Fahrzeugkarosserie mittels einer Befestigungsvorrichtung befestigt ist, wobei die Baugruppe aus Halterung und Befestigungsvorrichtung nach einem der vorangehenden Ansprüche ausgeführt ist.

## Claims

1. Assembly including a plate (12) and a device (14) for fixing the plate (12) to the body (10) of a motor vehicle, the fixing device including a nut and screw assembly (16, 18), a washer (22) able to be interposed between the plate (12) and a first face (26) of a body element (10) of the vehicle and a cage for holding the nut (18), in which the threaded body (30-40) of the nut and screw assembly passes through a hole (32) in the plate, a hole (34) formed in the washer (22) and is intended to pass through a hole (36) in the body element (10) in order to be screwed into the nut (18), which is able to be arranged on the other face (27) of the body element (10) and which is received in the cage (28), the washer (22) and the cage (28) are produced in a single assembly piece (20), the part of which forming a cage (28) deforms in expansion during operations of tightening the nut and screw assembly, characterised in that the washer is a damping washer and in that the washer (22) and cage (28) are produced from an elastomeric material, or rubber.

2. Assembly according to Claim 1, characterised in that the threaded body (30, 40) belongs to a clamping screw (16).

3. Assembly according to one of Claims 1 or 2, characterised in that the connecting piece (20) has substantially a shape formed by revolution about the screwing axis.

4. Assembly according to Claim 3, characterised in that the part forming a cage (28) has a stepped bore having a first section (34) for the threaded body (30) to pass rotatingly and a second, larger, section which receives the nut (18).

5. Assembly according to Claim 4, characterised in that the free end (46) of the part forming a cage (28) has means for the axial retaining of the nut in the second section (42).

6. Assembly according to Claim 5, characterised in that the bore has a third section (42) smaller than that of the second section (38).

7. Assembly according to Claim 5, characterised in that that part forming a cage (28) is radially narrow towards the inside.

8. Assembly according to any one of Claims 4 to 7, characterised in that the connecting area (50) between the first (34) and second (38) sections is conical.

9. Assembly according to any one of the preceding claims, characterised in that the connecting piece (20) is moulded onto the nut (18).

10. Assembly according to any one of the preceding claims, characterised in that the connecting piece (20) is able to be force-fitted, before tightening, in the hole (36) in the body element (10) of the vehicle.

11. Module for wiping a motor vehicle window, having a plate (12) carrying drive members for at least one wiper, characterised in that the plate (12) is fixed to an element (10) of the vehicle body by means of a fixing device, the assembly consisting of plate and fixing device being produced in accordance with any one of the preceding claims.
